# EUROPEAN PATENT APPLICATION

(11) **EP 3 064 814 A1**
(43) Date of publication of application: **07.09.2016**
(21) Application number: 15157775.6
(22) Date of filing: 05.03.2015
(51) Int. Cl.: F16K 27/00, F25B 41/04, F16K 27/02

(54) **Refrigerant valve arrangement**

(71) Applicant: Danfoss A/S, 6430 Nordborg (DK)
(72) Inventor: Dam, Bjarke Skovgård, 6051 Almind (DK); Halldorsson, Klaus, 6000 Kolding (DK)

(57) **Abstract**

A refrigerant valve arrangement (1) is shown comprising a housing (2) having an inlet (3) and an outlet (4) and defining a main flow direction (5) a first valve having a first valve axis (11), and a second valve having a second valve axis (17).

Such a refrigerant valve arrangement should have a low pressure drop between inlet and outlet.

To this end said first valve axis (11) encloses a first angle (α) smaller than 90° with said main flow direction (5) and/or said second valve axis (17) encloses a second angle (β) larger than 90° with said main flow direction (5).

## Description

The present invention relates to a refrigerant valve arrangement comprising a housing having an inlet and an outlet and defining a main flow direction, a first valve having a first valve axis, and a second valve having a second valve axis.

Such a refrigerant valve arrangement is known, for example, from US 7 328 593 B2. The first and second valves are in form of shut-off valves which are used to close the inlet and the outlet in case that service or repair has to be performed at other parts of the valve arrangement between inlet and outlet.

However, the first shut-off valve and the second shut-off valve have to be arranged in the flow path of the refrigerant flowing through the refrigerant valve arrangement. These two shut-off valves form an additional flow resistance causing a substantial pressure drop.

The object underlying the invention is to have a refrigerant valve arrangement with low pressure drop between inlet and outlet.

This object is solved with a refrigerant valve arrangement as described at the outset in that said first valve axis encloses a first angle smaller than 90° with said main flow direction and/or said second valve axis encloses a second angle larger than 90° with said main flow direction.

In other words, the valve axis of at least said first valve, which can be a shut-off valve or another kind of valve, e. g. a check valve and of said second valve, which can be a shut-off valve or another kind of valve, e. g. a check valve as well are not longer arranged at a right angle relative to said main flow direction, but are inclined so that a pressure drop caused by the respective shut-off valve can be reduced and minimized. Although the shut-off valves are still present in the flow path through the refrigerant valve arrangement, the pressure drop at least at one of these shut-off valves can be decreased.

Preferably said first angle is in a range from 30° to 60°. In a particular preferred embodiment said first angle is approximately 45°. An angle of 45° causes the smallest changes in the direction of flow of the refrigerant flowing through the refrigerant valve arrangement.

Preferably said second angle is in a range from 120° to 150°. In a particular preferred embodiment said second angle is approximately 135°. The change of direction of the flow of refrigerant through the refrigerant valve arrangement is smallest with an angle of 135°.

Preferably a sum of said first angle and said second angle is in a range of 170° to 190°. In a particular preferred embodiment said sum is approximately 180°. This means that the first valve axis and the second valve axis are inclined with respect to the main flow direction in opposite directions with the same or almost the same angle.

Preferably said first valve axis and said second valve axis enclose a third angle in a range of 75° to 105°. In a particular preferred embodiment said first valve axis and said second valve axis intersect each other with said third angle of approximately 90°. This keeps the amount of changes of direction of flow of a refrigerant flowing through the refrigerant valve arrangement as small as possible.

In a preferred embodiment said first valve comprises a first valve seat between said inlet and a first chamber, said second valve comprises a second valve seat between a second chamber and said outlet, wherein said first chamber and said second chamber are connected by a channel. Said first valve seat and said second valve seat may be offset to each other in direction of said channel. The channel keeps a flow path between said second chamber and said second valve short and correspondingly keeps pressure losses in this path low.

Preferably swirl reducing means are arranged in said first chamber. Refrigerant entering the first chamber tends to form a swirl. Such a swirl produces additional pressure losses. The swirl reducing means contribute to a reduction in such pressure losses.

Preferably said swirl reducing means are arranged at a bottom of said first chamber opposite said channel. Refrigerant entering said first chamber will flow along the bottom and will then reach the swirl reducing means. The swirl reducing means prevents the formation of one major swirl that will reduce the flow significantly. Instead may minor swirls be formed, but they will not have the same negative impact on the flow through the valve.

Preferably said swirl reducing means are arranged at an end of said first chamber opposite said first valve seat in main flow direction. In other words, the swirl reducing means are arranged in a position shortly before an endwall of the first chamber opposite said first valve seat. This is a position in which most swirl is produced.

Preferably said swirl reducing means comprise a ramp-like element having a surface rising in a direction towards said channel. The surface starts at the bottom of said first chamber. This starting point is arranged nearest the first valve seat. Incoming refrigerant reaches the swirl reducing means and is directed by the surface in direction to said channel thus reducing swirl and reducing pressure losses.

Preferably said surface comprises a concave curvature. The slope of the surface is small at the beginning and increases along the ramp-like element. This has an advantageous effect when reducing swirl.

In a preferred embodiment said ramp-like element is centered in said first chamber in a direction perpendicular to said main flow direction. In this way it is possible to achieve symmetric or almost symmetric conditions which have a positive effect on the swirl forming.

Preferably said ramp-like element comprises two flanks connecting said surface to said bottom. The ramp-like element does not extend over the complete width of the first chamber, i. e. the direction perpendicular to the main flow direction, but only to a middle part thereof. This is sufficient to reduce swirl.

Preferably said flanks are inclined. In other words, said flank do not extend perpendicular to the bottom of the first chamber but enclose an angle greater 90° with the bottom.

In a preferred embodiment said ramp-like element is integral with said housing. When the housing is molded, the ramp-like element is molded together with the rest of the housing.

Preferred embodiments of the invention will now be described in more detail with reference to the drawing, wherein:
- Fig. 1: shows a sectional view of a refrigerant valve arrangement,
- Fig. 2: shows a top view of a housing of a valve arrangement of fig. 1,
- Fig. 3: shows a section III-III of fig. 2 and
- Fig. 4: shows a simplified version of a refrigerant valve arrangement.

All Fig. show the same elements with the same numerals.

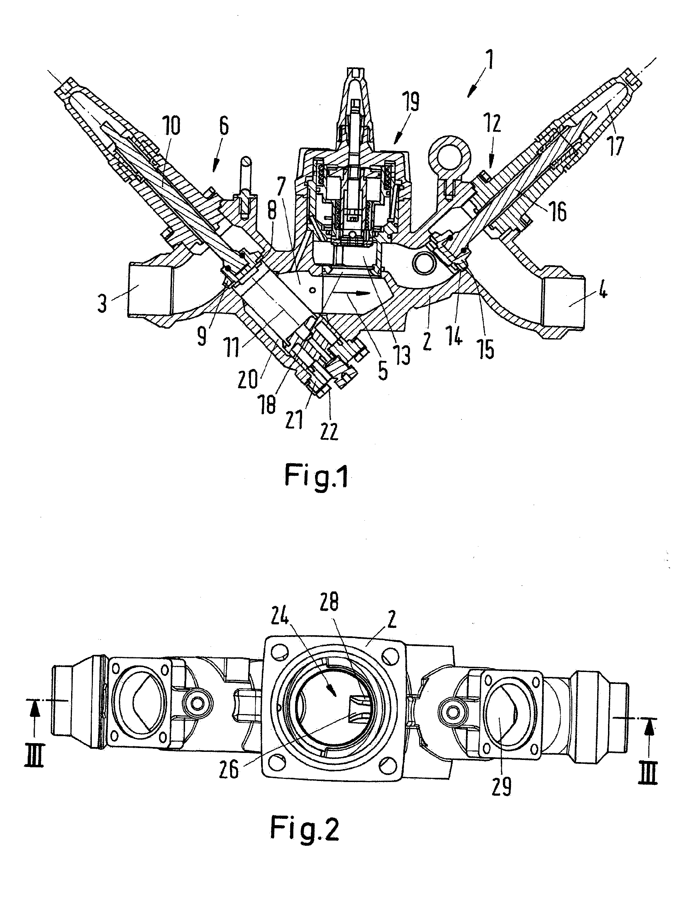

Fig. 1 shows a valve arrangement 1 comprising a housing 2. Housing 2 comprises an inlet 3 and an outlet 4. A main flow direction 5 is the direction of a straight line connecting inlet 3 and outlet 4.

A first valve 6 in form of a shut-off valve is located near said inlet 3 and is structured and arranged to interrupt or open a flow path from the inlet to a first chamber 7 within said housing 2. The first valve 6 comprises a first valve seat 8 and a first valve element 9. The first valve element 9 can be actuated by means of a first spindle 10 to be moved away from said first valve seat 8 or in a direction towards said valve seat 8. The direction of movement of the first valve element 9 is termed first valve axis 11.

In a similar way a second valve 12 in form of a shut-off valve is located near said outlet 4. Said second valve 12 is structured and arranged to open or close a flow path between a second chamber 13 and said outlet 4. To this end said second valve 12 comprises a second valve seat 14 and a second valve element 15. The second valve element 15 can be actuated by means of a second spindle 16 to be moved away from said second valve seat 14 or in a direction towards said second valve seat 14. The direction of movement of said valve element 15 is termed second valve axis 17.

The first valve 6 and the second valve 12 can be embodied other than shut-off valves, e. g. check valves and/or control valves.

A third valve 19 in form of a control valve is located between said first valve 6 and said second valve 12. Said third valve 19 can, for example, be controlled by a number of pilot actuators.

A strainer 20 is arranged in first chamber 7. Strainer 20 is held by holding means 21 which are fixed in housing 2 by bolts 22 or the like.

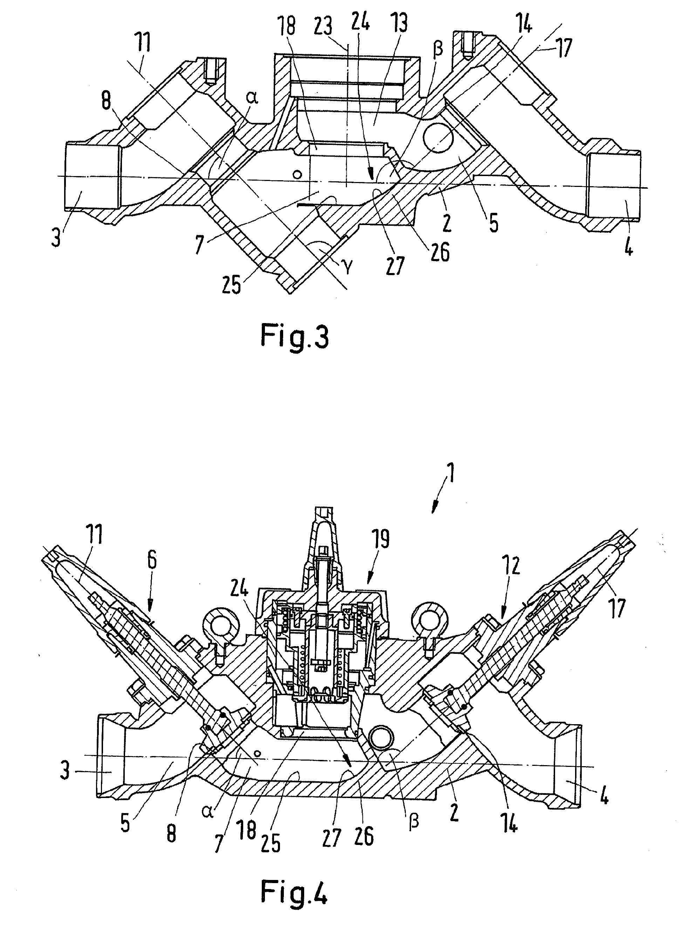

As can be seen in fig. 3, first valve axis 11 encloses a first angle α with said main flow direction 5 which is smaller than 90°. In the present case the first angle α is approximately 45°. Generally it is preferred that the first angle α is in a range from 30° to 60°, although an angle of 45° is an optimum.

In the same way the second valve axis 17 encloses a second angle β with said main flow direction 5, wherein said second angle β is larger than 90°. In the present embodiment the second angle β is 135°. More general it is preferred that said second angle β is in a range from 120° to 150°, although an angle of 135° is an optimum.

The sum of the first angle α and the second angle β is in a range of 170° to 190°. In a particular preferred embodiment this sum amounts to 180° meaning that the first valve axis 11 and the second valve axis 17 are inclined in a mirror symmetric manner.

Said first valve axis 11 and said second valve axis 17 enclose a third angle γ in a range of 75° to 105°. In particular preferred embodiment of this third angle γ is approximately 90°.

With the first angle α and the second angle β are chosen as mentioned above the necessary changes in the direction of flow of refrigerant through the refrigerant valve arrangement 1 can be minimized. Since each change of direction of flow causes a pressure drop the inclined arrangement of the first valve axis 11 and/or the second valve axis 17 can minimize the pressure drop caused by such a change of direction of flow accordingly. Therefore, with the angled first valve axis 11 and/or the angled second valve axis 17 pressure losses can be minimized.

As can be seen in fig. 3, the first valve seat 8 and the second valve seat 14 are offset relative to each other in a direction 23 of channel 18. This is an additional measure for minimizing the changes of direction of flow of a fluid through the refrigerant valve arrangement 1 and to minimize pressure drops.

Furthermore, swirl reducing means 24 are arranged in said first chamber 7. Swirl reducing means are arranged at a bottom 25 of said first chamber 7, wherein said bottom 25 is located opposite said channel 18. The swirl reducing means 24 are arranged at an end of said first chamber 7 opposite said first valve seat 8 in main flow direction 5. Swirl reducing means 24 comprise an element 26 and is in one piece with housing 2. The element 26 can, for example, be ramp-like and comprises a surface 27 rising in a direction towards said channel 8 when viewed in main flow direction. This surface 27 comprises a concave curvature. Said element 26 can have another form as long as it prevents the formation of one big swirl and forms instead one or more small swirls.

As can be seen in fig. 2, the ramp-like element 26 is centered in said first chamber 7 in a direction perpendicular to said main flow direction 5, i. e. relative to a middle plane 28 of housing 2. The ramp-like element comprises two flanks 29 connecting said surface 27 to said bottom 25. The flanks 29 are inclined with respect to said bottom 25, i. e. they enclose an angle larger than 90° with said bottom 25. Incoming refrigerant fluid reaching swirl reducing means 24 is directed towards channel 18 thereby reducing swirl and pressure losses caused by the swirl.

Fig. 4 shows a further valve arrangement 1 in a simplified version. Same elements are referred to with the same reference numerals in all figures.

A main difference can be seen in that a first chamber 7 has a slightly different form because the strainer 20 is omitted and therefore no accommodation space for strainer 20 is necessary.

However, the refrigerant valve arrangement according to fig. 4 shows the same first angle α between said first valve axis 11 and said main flow direction 5, said first angle α being approximately 45°. Furthermore, said refrigerant valve arrangement 1 have the same second angle β of approximately 135° between said second valve axis 17 and said main flow direction 5. Finally swirl reducing means 24 are arranged showing a ramp-like element 26 with a concave rounded surface 27 preventing formation of a big swirl and reducing corresponding pressure losses.

## Claims

1. Refrigerant valve arrangement (1) comprising a housing (2) having an inlet (3) and an outlet (4) and defining a main flow direction (5), a first valve (6) having a first valve axis (11), and a second valve (12) having a second valve axis (17), **characterized in that** said first valve axis (11) encloses a first angle (α) smaller than 90° with said main flow direction (5) and/or said second valve axis (17) encloses a second angle (β) larger than 90° with said main flow direction (5).

2. Valve arrangement according to claim 1, **characterized in that** a third valve (19) is located between said first valve (6) and said second valve (12).

3. Valve arrangement according to claim 1 or 2, **characterized in that** said first angle (α) is in a range from 30° to 60° and/or said second angle (β) is in a range from 120° to 150°.

4. Valve arrangement according to any of claims 1 to 3, **characterized in that** a sum of said first angle (α) and said second angle (β) is in a range of 170° to 190°.

5. Valve arrangement according to any of claims 1 to 4, **characterized in that** said first valve axis (11) and said second valve axis (17) enclose a third angle (γ) in a range of 75° to 105°.

6. Valve arrangement according to any of claims 1 to 5, **characterized in that** said first valve (6) comprises a first valve seat (8) between said inlet (3) and a first chamber (7), said second valve (12) comprises a second valve seat (14) between a second chamber (13) and said outlet (4), wherein said first chamber (7) and said second chamber (13) are connected by a channel (18).

7. Valve arrangement according to claim 6, **characterized in that** swirl reducing means (24) are arranged in said first chamber (7).

8. Valve arrangement according to claim 7, **characterized in that** said swirl reducing means (24) are arranged at a bottom (25) of said first chamber (7) opposite said channel (18).

9. Valve arrangement according to claim 8, **characterized in that** said swirl reducing means (24) are arranged at an end of said first chamber (7) opposite said first valve seat (8) in main flow direction (5).

10. Valve arrangement according to claim 9, **characterized in that** said swirl reducing means (24) comprise a ramp-like element (26).

11. Valve arrangement according to claim 10, **characterized in that** said surface (27) comprises a concave curvature.

12. Valve arrangement according to claim 10 or 11, **characterized in that** said ramp-like element (26) is centered in said first chamber (7) in a direction perpendicular to said main flow direction (5).

13. Valve arrangement according to claim 12, **characterized in that** said ramp-like element (26) comprises two flanks (28) connecting said surface (27) to said bottom (25).

14. Valve arrangement according to claim 13, **characterized in that** said flanks (28) are inclined.

15. Valve arrangement according to any of claims 10 to 14, **characterized in that** said ramp-like element (26) is integral with said housing.
